# EUROPÄISCHE PATENTANMELDUNG

(11) **EP 4 498 441 A1**
(43) Veröffentlichungstag der Anmeldung: **29.01.2025**
(21) Anmeldenummer: 24185954.5
(22) Anmeldetag: 02.07.2024
(51) Int. Cl.: H01M 4/04, H01M 4/62, H01M 4/66, H01M 10/052, H01M 4/02

(54) **VERFAHREN ZUR FERTIGUNG EINER ELEKTRODE FÜR EINE LITHIUM-IONEN-BATTERIEZELLE**

(30) Priorität: 24.07.2023 DE 102023206995
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betrifft ein Verfahren zur Fertigung einer Elektrode (K) für eine Lithium-Ionen-Batteriezelle, die aus einer Stromableiterfolie (1) mit darauf ein- oder beidseitig beschichtetem Aktivmaterial aufgebaut ist, das als Binder PVDF enthält. Erfindungsgemäß weist das Verfahren zur Einstellung der Porosität der auf der Stromableiterfolie (1) beschichteten Aktivmaterialschicht (2) zumindest einen Prozessschritt auf, bei dem zumindest ein äußeres elektrisches Feld angelegt wird, mit dem die Dipolarität von PVDF derart genutzt wird, dass die PVDF-Molekülketten unter Reduzierung der Porosität kontrahieren oder unter Erhöhung der Porosität expandieren.

## Beschreibung

Die Erfindung betrifft ein Verfahren zur Fertigung einer Elektrode für eine Lithium-Ionen-Batteriezelle nach dem Oberbegriff des Anspruches 1.

Eine solche Elektrode besteht aus einer Stromableiterfolie, auf der ein- oder beidseitig eine Aktivmaterialschicht aufgetragen ist. Das Verfahren zur Fertigung einer solchen Elektrode weist einen Beschichtungsprozess auf, bei dem eine Beschichtungspaste (nachfolgend Slurry) auf die noch unbeschichtete Stromableiterfolie aufgebracht wird. Das auf die Stromableiterfolie aufgetragene Aktivmaterial weist eine hohe Porosität auf. Zur Steigerung der Kapazität in der Batteriezelle wird die mit dem Aktivmaterial beschichtete Stromableiterfolie einem Kalandrierprozess unterzogen. Das Aktivmaterial wird beim Kalandrieren um etwa 40 % komprimiert. Der Kalandrierprozess ähnelt einem Walzvorgang, bei dem das Aktivmaterial in einer kleinen Verformungszone mit einer hohen Kalandrierkraft verdichtet wird. Dabei ist es wichtig, dass einerseits die Porosität abnimmt und andererseits die Porosität gleichmäßig über die Schichtdicke verteilt ist.

Folgende Probleme treten während des Kalendrierprozesses auf: Aufgrund der hohen Kalandrierkraft nimmt die Porosität an der Schicht-Oberfläche, die in Kontakt mit den Kalandrierwalzen kommt, stärker ab. Beispielhaft besteht eine Anode aus Graphit als Aktivmaterial. Hinzu kommen das Bindemittel SBR, das Verdünnungsmittel CMS und leitfähiger Kohlenstoff. Es wird nach dem Kalandrierprozess eine Dichte von 1,6 g/cm³ angestrebt, um eine ausreichend hohe volumetrische Energiedichte der Zelle zu erreichen. Eine hohe Dichte erhöht auch die Leitfähigkeit der Zelle. Mit zunehmender Dichte nimmt jedoch die Porosität ab. Die Porosität nimmt an der Schicht-Oberfläche eher ab, was die Einlagerung von Lithium-Ionen in die Graphitschichten erschwert. Dies führt zu Lithiumablagerungen (Lithium platting) auf der Schicht-Oberfläche. Dadurch wird die Lebensdauer der Zelle drastisch verkürzt. Da die Aktivmaterial-Verformung beim Kalandrieren in einem sehr kleinen Bereich stattfindet (abhängig vom Durchmesser der Walze), gibt es eine sehr hohe Spannungskonzentration in einem kleinen Verformungsbereich. Diese Spannungskonzentration führt zu Rissen im Aktivmaterial.

Zusammengefasst ist also eine hohe Kompression beim Kalandrieren wünschenswert; jedoch ist sie mit Problemen wie der Lithiumablagerung verbunden.

Die Veränderung der Porenstruktur für bestimmte Porengrößenbereiche und die Verformung des Aktivmaterials sind entscheidende Faktoren, die die elektrochemische Leistung negativ beeinflussen. Die Oberflächenrauhigkeit und die offenen Poren an der Oberfläche, die definitiv einen Einfluss auf das gesamte Benetzungsverhalten der Elektroden mit Elektrolyt haben, ändern sich mit dem Verdichtungsverhältnis. Normalerweise wird beim Kalandrieren die Porosität bis auf 30% reduziert; bei einer solchen Zielporosität kann jedoch eine lokale Porosität unmittelbar an der Schicht-Oberfläche der Aktivmaterialschicht bereits bis auf 20 % reduziert sein. Die Porosität ist daher über die Schichtdicke nicht gleichmäßig verteilt. Vielmehr ist die Porosität an der Schicht-Oberfläche im Vergleich zur Porosität nahe der Stromableiterfolie stark reduziert.

Die übermäßig große Verformung der Aktivmaterial-Partikel an der Schicht-Oberfläche hat Auswirkungen auf die elektrochemische Leistung, da die Oberflächenporen die Lithiumeinlagerung während der elektrochemischen Zyklen blockieren, insbesondere bei hohen C-Raten.

Bei hohen Kompressionsraten (20 % bis 25%) im Kalandrierprozess werden besonders große Poren zwischen 5 µm und 2 µm durch Kompression geschlossen. Der Einfluss dieser fehlenden großen Poren und des insgesamt geringeren Gesamtporenvolumens auf das elektrochemische Verhalten ist eine der Hauptursachen für die Lithiumplattierung, die die Lebensdauer der Zelle drastisch verringert. Bei hohen Kompressionsraten (d.h. Reduzierung der Porosität auf bis zu 20 % bis 25 %) werden die großen Poren zwischen 5 µm und 2 µm geschlossen und das Gesamtporenvolumen der Elektrode verringert. Die durch die kalandrierbedingte Verformung der Aktivmaterial-Partikel blockierte Oberfläche führt zu einer Transportbarriere für Lithium-Ionen, was die Langzeitleistung dieser Elektroden bei relativ hohen C-Raten drastisch beeinflusst.

Sowohl die Blockierung großer Poren als auch die Verringerung des gesamten Porenvolumens in hohem Maße führt zu einer Reduzierung von Elektrolyt/Partikel-Grenzflächen, die für den Lithium-Ionen-Transfer zur Verfügung stehen. Die Verringerung der Grenzflächen zwischen Elektrolyt und Partikeln kann ein Problem bei der Elektrolytbenetzung verursachen. Dies trägt ebenfalls zu einer Beeinträchtigung der elektrochemischen Leistung bei.

Aus der US 2022/0094027 A1 ist eine Batteriezelle bekannt, bei der das Wachstum von Lithiumdendriten hauptsächlich durch die Bildung einer Schutzschicht verhindert wird. Es ist zudem möglich, das Wachstum von Lithium-Dendriten sekundär durch die Bildung einer volumenexpandierbaren Schicht zu hemmen.

Die Aufgabe der Erfindung besteht darin, ein Verfahren zur Fertigung einer Elektrode für eine Lithium-lonen-Batteriezelle bereitzustellen, bei der im Vergleich zum Stand der Technik der Benetzungsprozess zur Benetzung des Aktivmaterials mit flüssigem Elektrolyt beschleunigt und/oder die Leistungsfähigkeit der Batteriezelle erhöht wird.

Die Aufgabe ist durch die Merkmale des Anspruches 1 gelöst. Bevorzugte Weiterbildungen der Erfindung sind in den Unteransprüchen offenbart.

Die Erfindung geht von einem Verfahren zur Fertigung einer Elektrode für eine Lithium-Ionen-Batteriezelle aus. Die Elektrode besteht aus einer Stromableiterfolie mit darauf ein- oder beidseitig beschichtetem Aktivmaterial, das als Binder PVDF enthält. Gemäß dem kennzeichnenden Teil des Anspruches wird zur Einstellung der Porosität der auf der Stromableiterfolie beschichteten Aktivmaterialschicht zumindest ein Prozessschritt bereitgestellt, bei dem zumindest ein äußeres elektrisches Feld angelegt wird. Mit dem Anlegen des äußeren elektrischen Feldes wird die Dipolarität von PVDF genutzt. Dessen Molekülketten können sich je nach Feldrichtung des angelegten elektrischen Felds kontrahieren oder expandieren, und zwar unter Reduzierung der Porosität oder unter Erhöhung der Porosität.

In der vorliegenden Idee wird die Elektrode durch Kalandrieren auf die gewünschte Dichte komprimiert. Beim Kalandrieren wird die Porosität, wie bereits erläutert, insbesondere an der Oberfläche der Aktivmaterialschicht lokal übermäßig stark verringert. Da die Porosität abnimmt, ist es schwierig, die nunmehr kleineren Poren mit Elektrolyt zu füllen. Das bedeutet im Stand der Technik, dass sich die Lithiumeinlagerungsrate verlangsamt und das Lithium eine Lithiumplattierung auf der Oberfläche der Aktivmaterialschicht bildet. Wenn die Lade- und Entladerate schneller ist als die Lithium-Wechselwirkungsrate, erhöht sich die Wahrscheinlichkeit der Lithiumplattierung bzw. Lithiumablagerung. Bei der Kathode ist das Problem noch gravierender als bei der Anode. Das Aktivmaterial der Kathode hat keine geordnete Schichtstruktur wie Graphit. Die Dichte der Kathode ist mindestens zweimal höher als die der Anode. Außerdem weist die Anode synthetisches Gummi als Bindemittel auf, was ihr mehr Flexibilität verleiht. Die vorliegende Erfindung konzentriert sich in erster Linie darauf, wie die Porosität des Aktivmaterials durch Expansion des Bindemittels, d.h. PVDF, erhöht werden kann. Das gleiche Phänomen kann auch bei der Anode genutzt werden, wenn PVDF-Bindemittel auch auf der Anodenseite verwendet wird.

Das für die Kathode verwendete Bindemittel ist Polyvinylidenfluorid (PVDF). PVDF ist mit Ruß und Kohlenstoffnanoröhren (CNT) vermischt, um ein Elektronennetzwerk um das Aktivmaterial zu bilden. PVDF besteht aus einer Fluorpolymer-Molekülkette. Das PVDF weist einen hohen Dipolarität auf und löst sich in dem dipolaren aprotischen Lösungsmittel N-Methyl-2-Pyrrolidon (NMP) auf, um einen Slurry zu bilden. Die PVDF-Molekülketten können sich bei Anlegen eines externen elektrischen Felds ausdehnen oder zusammenziehen. Dieses Phänomen der Ausdehnung und Kontraktion der PVDF-Molekülkette kann erfindungsgemäß zur Erzeugung zusätzlicher Porosität in der bereits kalandrierten Elektrode genutzt werden.

Das Kristallinitätsverhalten von PVDF wird wie folgt genutzt: Die teilweise Fluorierung der Polymerkette im PVDF bedeutet, dass es in verschiedene Polymorphe kristallisieren kann, die als α, β und γ bezeichnet werden. PVDF ist in der Regel zu 50 bis 60% kristallin; die Eigenschaften wie die Dichte hängen vom Ausmaß der Kristallinität und dem Anteil der einzelnen gebildeten kristallinen Phasen ab. Die α- und γ-Formen enthalten beide trans-Bindungen, während die β-Form ausschließlich aus trans-Bindungen entlang der Polymerkette besteht.

Aufgrund der Polarisierung der C-F-Bindung enthält ein PVDF-Makromolekül eine große Anzahl von Dipolen. Die α-Phase ist die thermodynamisch stabilste der kristallinen Phasen von PVDF, enthält aber keine allgemeine Vorzugsrichtung der Dipole und zeigt daher keine Reaktion bei Anlegen eines äußeren elektrischen Felds. In den β- und γ-Formen ist es jedoch möglich, dass sich sämtliche kleinen Dipole des PVDF-Makromoleküls so ausrichten, dass ein permanenter Gesamtdipol entsteht. Der Prozess der Ausrichtung der Dipole wird als "poling" bzw. Orientierungspolarisation bezeichnet und beinhaltet das Anlegen eines elektrischen Feldes an das Aktivmaterial, während die Prozesstemperatur über der Curie-Temperatur von PVDF gehalten wird, so dass sich die PVDF-Molekülketten im angelegten elektrischen Feld ausrichten können (der Curie-Übergang von PVDF tritt bei ca. 140 °C auf). Sobald die PVDF-Molekülketten ausgerichtet sind, wird das Aktivmaterial abgekühlt. Dabei verbleiben die Dipole des PVDF-Makromoleküls in ihrer ausgerichteten Position. Sobald ein äußeres elektrisches Feld an das Aktivmaterial angelegt wird, verformt dieses sich. Beispielhaft kann sich das Aktivmaterial in der Richtung senkrecht zum angelegten Feld zusammenziehen oder ausdehnen. Das bedeutet, dass die Elektrode durch die Kontraktion und Ausdehnung der PVDF-Molekülkette dicker und dünner werden kann. In einer Ausführungsvariante kann die Kontraktion während eines unmittelbar nach dem Beschichtungsprozess erfolgenden ersten Trocknungsprozesses durchgeführt werden. Die Ausdehnung kann dagegen während des Vakuumtrocknungsprozesses nach dem Kalandrieren erfolgen, so dass sich die Elektrode, insbesondere an der Oberfläche der Aktivmaterialschicht ausdehnt und dort Poren entstehen. Das heißt, dass die Ausrichtung und Verformung der PVDF-Dipole unter dem elektrischen Feld nutzbar sind, um einerseits vor dem Kalandrierprozess die Aktivmaterialschicht mit höherer Dichte bereitzustellen und um andererseits während der Vakuumtrocknung die Porosität der Aktivmaterialschicht zu erhöhen.

Die piezoelektrischen Eigenschaften von PVDF sind gut bekannt. Erfindungsgemäß werden dies Eigenschaften genutzt, um mehr Porosität in der Elektrode bereitzustellen. Wichtig ist, dass die Porosität oberhalb der Curie-Temperatur von 140°C eingestellt wird. Während des Trocknungsprozesses nach der Beschichtung durchläuft die Kathodenelektrode diese Temperatur. Während des Prozesses kann daher ein elektrisches Feld angelegt werden und den Kristallen eine geordnete Struktur aufgeprägt werden. Das elektrische Feld ist so beschaffen, dass sich das PVDF je nach Bedarf zusammenzieht und die Elektrode dünner wird oder umgekehrt.

Nachdem die PVDF-Dipole im ersten Trocknungsprozess ausgerichtet und dann abgekühlt sind, verbleiben sie im ausgerichteten Zustand. Dies ist auf die ferroelektrische Eigenschaft von PVDF zurückzuführen. Im Kalandrierprozess wird die Elektrode weiter verdichtet, so dass sich die Porosität weiter reduziert. Wenn die Elektrode (wie im Stand der Technik) mit einer derart stark reduzierten Porosität zur Elektrolyt-Befüllung transferiert werden würde, wäre die Benetzung sehr schwierig, da die Poren insbesondere an der Oberfläche der Aktivmaterialschicht weitegehend geschlossen sind. Nach dem Kalandrieren wird die Elektrodenbahn einem Schneidprozess unterworfen, in dem aus der Elektrodenbahn die Elektroden vereinzelt und zugeschnitten werden. Die Elektroden werden dann in ein Magazin gelegt. Dieses Magazin wird in einem zweiten Trocknungsprozess, d.h. im Vakuum bei 140°C getrocknet. Dies ist die gleiche Temperatur wie die Curie-Temperatur von PVDF. Während des Trocknungsprozesses wird zum zweiten Mal ein externes elektrisches Feld angelegt, so dass sich die PVDF-Molekülketten verformen, und zwar bevorzugt ausdehnen. Durch das Ausdehnen der PVDF-Molekülketten werden Aktivmaterial-Partikel verdrängt, wodurch sich die Porosität in der Aktivmaterialschicht erhöht.

Das elektrische Feld kann etwa 5 MV/m aufweisen. Während des ersten Trocknungsprozesses nach der Beschichtung werden die PVDF-Molekülketten ausgerichtet und gleichzeitig die PVDF-Molekülketten zusammengezogen. Dadurch erhöht sich die Dichte der Elektrode. Die ferroelektrische Eigenschaft von PVDF erlaubt es den PVDF-Dipolen nicht, sich neu auszurichten, auch wenn kein elektrisches Feld vorhanden ist.

Ein zweites elektrisches Feld mit demselben Wert wird während der Vakuumtrocknung, d.h. bevorzugt nach dem Schneidprozess angelegt, wodurch sich die PVDF-Dipole wieder verformen, und Ausdehnung der PVDF-Molekülketten. Dadurch werden Aktivmaterial-Partikel von den sich ausdehnenden PVDF-Molekülketten weggedrückt, die so dass die Elektrodendicke zunimmt und die Porosität größer wird.

Im Folgenden sind die Unterschiede der Erfindung zum Stand der Technik zusammengefasst: PVDF mit einer Kristallstruktur mit überwiegend β- und γ-Form wird als Bindemittel bevorzugt. Vorzugsweise wird kristallines PVDF als Hauptbestandteil des Bindemittels verwendet. Der Slurry der Kathode mit Aktivmaterial, PVDF-Bindemittel, leitfähigem Kohlenstoff/Kohlenstoff-Nanoröhrchen und NMP als Lösungsmittel wird auf herkömmliche Weise verwendet. Der Slurry wird mit einer Schlitzdüse auf ein Aluminiumsubstrat aufgetragen, wie es dem Stand der Technik entspricht. Nach der Beschichtung der ersten Schicht-Oberfläche durchläuft die so gebildete Elektrodenbahn eine Trockenzone mit einer Temperatur von etwa 140°C bis 150°C. Dadurch verdampft NMP und PVDF erreicht seine Curie-Temperatur. Das bedeutet, dass die PVDF-Kristalle keine ferroelektrische Eigenschaft mehr aufweisen. PVDF-Kristalle weisen bei dieser Temperatur maximale piezoelektrische Eigenschaften auf. Die Elektrodenbahn durchläuft im Trockner einen Kondensator, in dem ein elektrisches Feld von etwa 50MV/m erzeugt wird. Der Dipol von PVDF wird nun unter dem elektrischen Feld ausgerichtet. Ein negativer Dipol wird von der positiven Kondensatorplatte angezogen und ein positiver Dipol von der negativen Kondensatorplatte angezogen. Auf diese Weise ziehen sich die PVDF-Molekülketten in der Aktivmaterialschicht zusammen, was dazu führt, dass sich die Porosität der Aktivmaterialschicht reduziert. Das elektrische Feld wird sowohl senkrecht zur Elektrodenoberfläche (parallel zur Elektrodendicke) als auch parallel zur Elektrodenoberfläche angelegt. Auf diese Weise werden die PVDF-Ketten, die senkrecht zum elektrischen Feld liegen, maximal verdichtet.

Der nächste Prozess ist das Kalandrieren, bei dem die Elektrode zwischen Walzen gepresst wird. Hier wird die Elektrode auf die endgültige Dichte und Dicke komprimiert. Leitfähiger Kohlenstoff und die PVDF-Kette nehmen einen Teil der Energie auf und geben sie wieder ab, sobald das Kalandrieren beendet ist und die aufgewickelte Elektrodenbahn zwischengelagert wird. Diese Rückfederung erhöht teilweise die Porosität, wenn sich die Elektrode ausdehnt. Nach dem Kalandrieren wird die Elektrodenbahn einem Schneidprozess zugeführt. Die Elektrodenbahn wird in die Elektroden vereinzelt, die in einem Magazin gelagert werden. Die durch das elektrische Feld entstandene Dipolanordnung bleibt während der Lagerzeit bei Raumtemperatur erhalten.

Das Magazin mit den Elektroden wird in eine Vakuumtrocknungsanlage angeordnet. Hier wird die Temperatur auf etwa 140°C eingestellt. Das Magazin wird drei bis vier Stunden lang erhitzt, um das restliche NMP-Lösungsmittel von der Elektrode zu entfernen. Während des Trocknungsprozesses wird das elektrische Feld in zwei Richtungen angelegt. Das eine senkrecht zur Elektrodenoberfläche und das andere parallel zur Elektrodenoberfläche. Das elektrische Feld hat eine andere Polarität als das elektrische Feld, das während des Trocknungsprozesses nach der Beschichtung angelegt wird.

Aufgrund des elektrischen Feldes werden die negativen Pole der PVDF-Molekülketten von negativen Kondensatorplatte abgestoßen, während die positiven Pole der PVDF-Molekülketten von der positiven Kondensatorplatte abgestoßen werden. Die Dipolanordnung, die sich aufgrund des ersten elektrischen Feldes entwickelt hat, wird nun gestört, was zu einer Ausdehnung des PVDF-Kristalls führt. Da sich der PVDF-Kristall ausdehnt, vergrößert sich die Elektrodenfläche sowohl in der Ebene als auch in normaler Richtung. Diese Vergrößerung der Elektrodenfläche führt zu mehr Porosität. Das bedeutet, dass die Porosität, die während des Kalandrierprozesses geschlossen wurde, durch die molekulare Ausdehnung von PVDF wieder hergestellt wird. Die Zunahme der Porosität liegt im Bereich von 2 bis 5 µm, was für eine bessere Elektrolytbenetzung und einen schnelleren Lithiumtransfer unerlässlich ist.

In einer alternative Ausführungsform kann genau in umgekehrter Weise ein elektrisches Feld erzeugt werden. Das bedeutet, dass beim Trocknen nach der Beschichtung die Dipole unterbrochen werden und die Aktivmaterialschicht sich ausdehnen kann. Nach dem Kalandrieren erfahren die PVDF-Kristalle eine Kompressionskraft und sparen so ebenfalls Energie. Sie werden zusammen mit dem leitenden Kohlenstoff zurückfedern und mehr Porosität erzeugen. Während der Vakuumtrocknung der Schneidoperation wird ein entgegengesetztes elektrisches Feld an die Elektroden angelegt, das die Dipole ausrichtet und eine Kompression der Elektroden bewirkt, wodurch diese dichter werden. Dies bedeutet, dass das Aktivmaterial durch das PVDF-Bindemittel fester gehalten wird, da es zusammengeschoben wird. Dies bedeutet eine geringere Gefahr der Delaminierung. Hier nutzen wir die piezoelektrische Eigenschaft von PVDF für einen anderen Zweck, nämlich um die Elektrode dichter und dichter zu machen.

Das Prinzip ist dasselbe: Es wird ein elektrisches Feld an die PVDF-Molekülketten angelegt. Ein elektrisches Feld zieht die PVDF-Molekülketten zusammen, während das andere elektrische Feld die PVDF-Molekülketten ausdehnt. Hier findet daher - im Vergleich zur ersten Ausführungsform - der umgekehrte Mechanismus. Beide haben ihre eigenen Vorteile.

Die Hauptvorteile des oben beschriebenen Ausführungsform sind folgende: keine Lithiumplattierung durch Schließen der Poren während des Kalandrierprozesses; es wird eine hohe Dichte der Elektrode erreicht und auch die Porosität ist hoch; das Porenvolumen wird nach dem Kalandrieren durch die Ausdehnung der PVDF-Kristallgröße vergrößert; es wird eine hohe volumetrische Energiedichte der Elektrode erreicht, ohne das Porenvolumen zu beeinträchtigen; die elektrische Leitfähigkeit des Aktivmaterials wird durch die hohe Dichte nach dem Kalandrieren erhöht. Die Elektrode kann dichter gemacht werden, wenn ein umgekehrtes elektrisches Feld angelegt wird. Dies kann die Energiedichte / das Volumen erhöhen Normalerweise besteht das Bindemittel in der Kathode aus PVDF und leitendem Kohlenstoff. Wenn PVDF ohne externes Feld zusammengedrückt und ausgedehnt wird, wird aufgrund seiner piezoelektrischen Eigenschaften eine Spannung im PVDF-Kristall erzeugt. Wenn eine Spannung erzeugt wird, bewegen sich die Elektronen mit höherer Geschwindigkeit durch den Leitkohlenstoff und das PVDF. Die Leitfähigkeit der Elektronen nimmt zu. Die Temperatur während der Trocknung nach der Beschichtung und während der Vakuumtrocknung wird zur Überwindung der Curie-Temperatur von PVDF verwendet. Eine zusätzliche Heizung ist nicht erforderlich. Eine höhere Porosität bedeutet eine schnellere Benetzung durch den Elektrolyten und eine höhere Leitfähigkeit der Lithiumionen. Es ist nicht notwendig, der Elektrodenaufschlämmung einen Weichmacher hinzuzufügen, um die Porosität nach dem Kalandrieren zu erhöhen. Der größte Teil der Porosität nimmt aufgrund der Ausdehnung der PVDF-Kette in Richtung der Dicke zu. In unserer Idee wird das elektrische Feld auch parallel zur XY-Ebene angelegt. Das bedeutet, dass eine Ausdehnung in der XY-Ebene ebenfalls möglich ist und somit die Porosität sowohl in der planaren Elektrodenoberfläche als auch normal zur Elektrodenoberfläche zunimmt. Dies erhöht die Einlagerung von Lithium, da Lithium in zwei Richtungen in das Aktivmaterial ein- und austreten kann. PVDF-Kristalle werden nach dem Anlegen eines elektrischen Feldes gleichmäßig ausgerichtet. Dies erhöht die mechanische Festigkeit, und die PVDG-Kristalle können mehr Belastung aushalten. Das bedeutet, dass die Belastung des Aktivmaterials während der Kompression oder während des Aufblähens stärker von PVDF aufgenommen wird und somit der Aufbau von Spannungsspitzen im Aktivmaterial reduziert wird.

Nachfolgend ist ein Ausführungsbeispiel der Erfindung anhand der beigefügten Figuren beschrieben. Es zeigen:
- Figur 1: in perspektivischer Darstellung eine fertiggestellte Kathode für eine Lithium-lonen-Batteriezelle; und
- Figuren 2a bis 8c: Ansichten, anhand derer eine Prozessabfolge zur Herstellung der Kathode beschrieben ist.

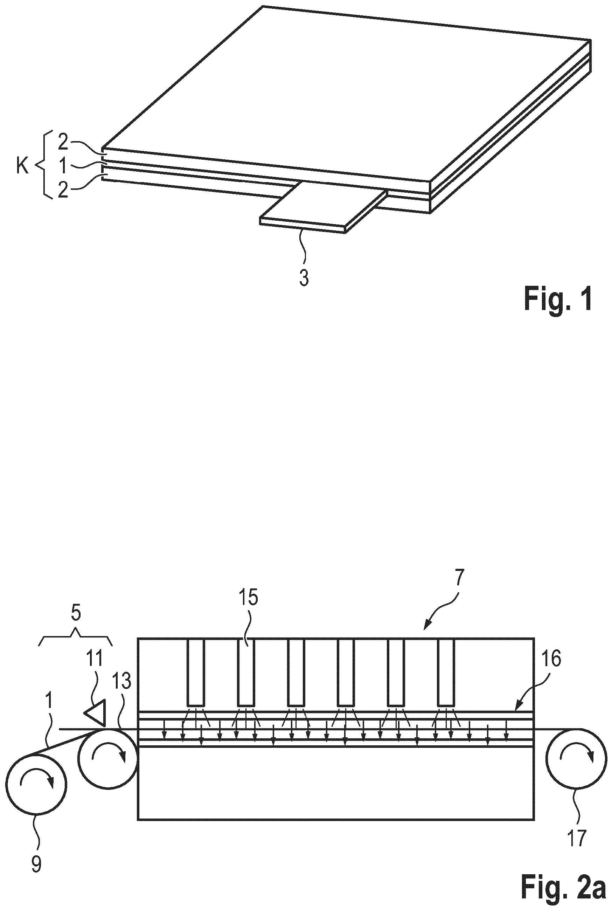

In der Figur 1 ist eine fertiggestellte Kathode K für eine Lithium-lonen-Batteriezelle gezeigt. Die Kathode K weist eine mittlere Stromableiterfolie 1 aus zum Beispiel Aluminium auf, die beidseitig mit einer Aktivmaterialbeschichtung beschichtet ist. In der Figur 1 ist die Trägerfolie 1 mit einer Ableiterfahne 3 ausgebildet, die die beiden Aktivmaterialschichten 2 seitlich überragt. Hauptbestandteil der Aktivmaterialschicht ist ein Lithiummetalloxid. Zudem enthält die Aktivmaterialschicht als Binder PVDF.

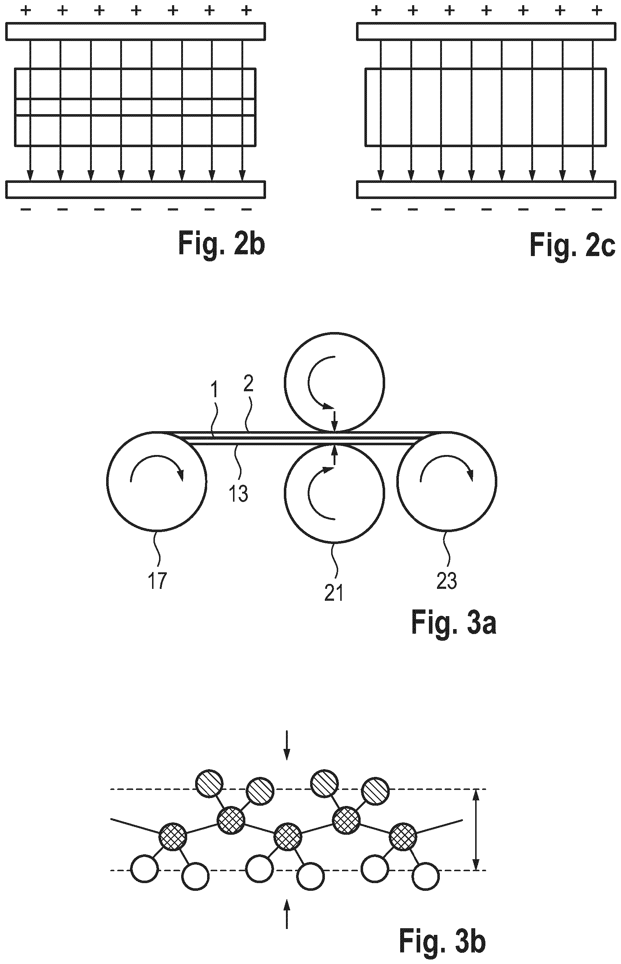

Nachfolgend ist ein Fertigungsprozess zur Herstellung der in der Figur 1 gezeigten Kathode K anhand der Figuren 2 bis 8 beschrieben. Demnach ist in der Figur 2a eine Beschichtungsstation 5 sowie eine nachgeschaltete Trocknungsstation 7 gezeigt. Am Eingang der Beschichtungsstation 5 befindet sich eine Wicklung 9 (nachfolgend Coil) aus einer unbeschichteten Stromableiterfolie 1. Diese wird in einem kontinuierlichen Prozess durch die Beschichtungsstation 5 und durch die Trocknungsstation 7 geführt. Die Beschichtungsstation 5 weist ein Auftragswerkzeug 11 auf, mit dem eine Beschichtungspaste, das heißt eine zähflüssige Ausgangskomponente des Aktivmaterials (nachfolgend Slurry) auf die Stromableiterfolie 1 aufgetragen wird, und zwar unter Bildung einer Elektrodenbahn 13. In der Figur 2a wird in der Beschichtungsstation 5 beispielhaft lediglich die Oberseite der Stromableiterfolie 1 mit dem Slurry beschichtet und dann in der Trocknungsstation 7 getrocknet. Die Unterseite der Stromableiterfolie 1 kann (obwohl nicht dargestellt) in gleicher Weise beschichtet und getrocknet werden.

In der Trocknungsstation 7 wird die Elektrodenbahn 13 mit Hilfe von Heißluftdüsen 15 getrocknet, wodurch der Aktivmaterialschicht 2 Lösungsmittel, insbesondere NMP, entzogen wird. Am Ausgang der Trocknungsstation 7 wird die beschichtete sowie getrocknete Elektrodenbahn 13 wieder zu einem Coil 17 aufgewickelt.

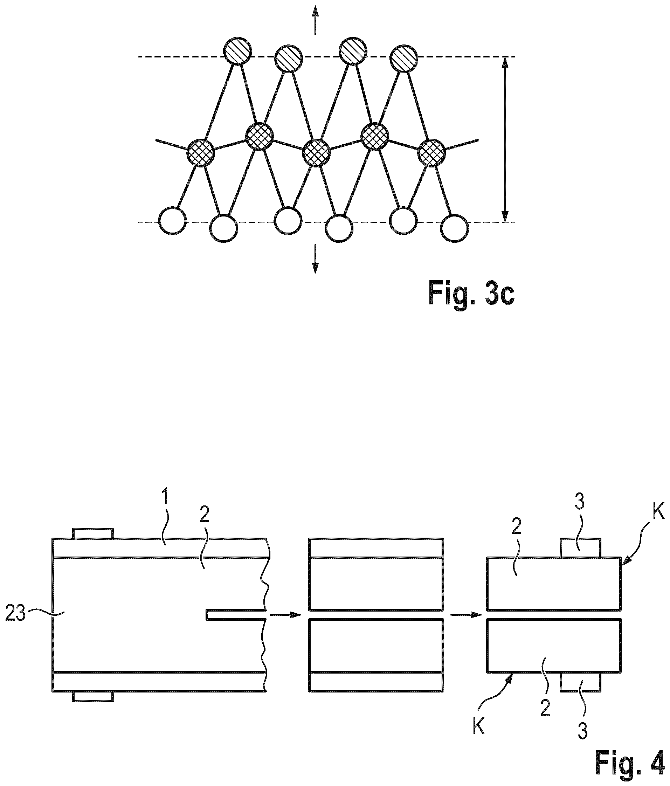

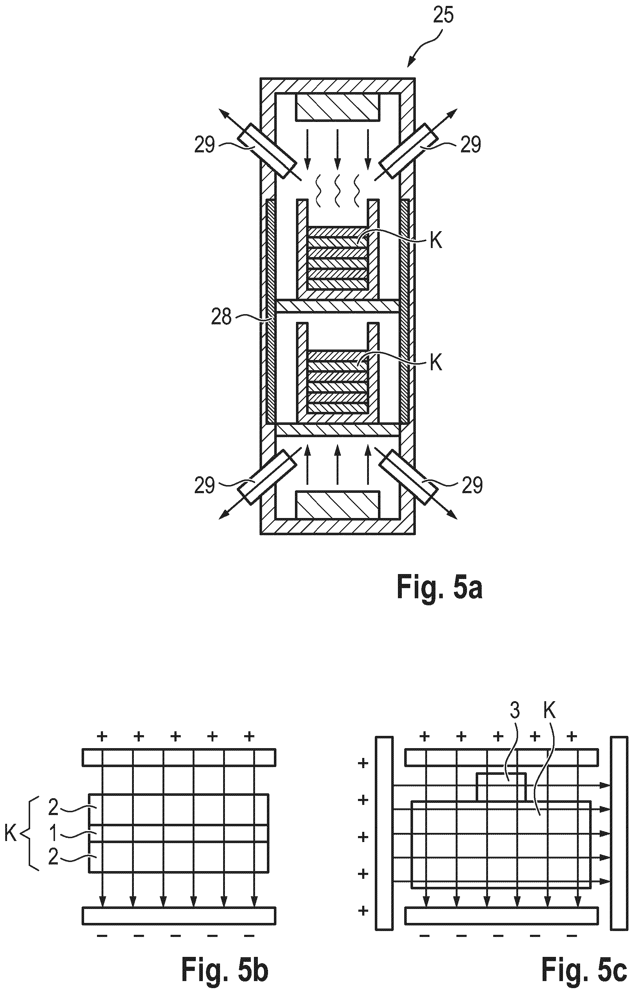

Das Coil 17 mit der getrockneten sowie beschichteten Stromableiterfolie 1 wird zu einer Kalandrierstation 19 (Figur 3a) transferiert. In der Kalandrierstation 19 wird die beschichtete Stromableiterfolie 1 durch den Walzenspalt eines Walzenpaars 21 geführt, so dass die Porosität der Aktivmaterialschicht 2 auf einen vordefinierten Wert reduziert wird. Nach dem Kalandrierprozess wird die so behandelte Elektrodenbahn 13 wieder auf ein Coil 23 aufgewickelt, das einem Schneidprozess (Figur 4) zugeführt wird. Gemäß der Figur 4 wird die von dem Coil 23 abgewickelte Elektrodenbahn 13 durch einen Längsschnitt (slitting) sowie durch Querschnitte und durch seitliche Zuschnitte (notching) zu Kathoden K vereinzelt und zugeschnitten. Die vereinzelten Kathoden K werden anschließend in einer Ablagestation 25 (Figur 5a) gestapelt. Gemäß der Figur 5a weist die Ablagestation 25 einen Vakuumtrockner auf, mittels dem der Elektrodenstapel vakuumgetrocknet wird. Zudem weist die Ablagestation 25 eine Saugeinrichtung 29 auf, über die verdampftes Rest-Lösungsmittel sowie Restfeuchte abgesaugt und recycelt werden kann.

In der in den Figuren 2a bis 5a gezeigten Prozesskette ist sowohl in der Trocknungsstation 7 als auch in der Ablagestation 25 jeweils ein Kondensator 26, 28 verbaut. Zwischen den Kondensatorplatten dieser Kondensatoren 26, 28 wird ein elektrisches Feld erzeugt, mit dem die PVDF-Dipolarität der PVDF-Molekülketten nutzbar ist. Die PVDF-Molekülketten können sich daher in der Aktivmaterialschicht 2 unter Reduzierung der Porosität kontrahieren, oder unter Erhöhung der Porosität expandieren.

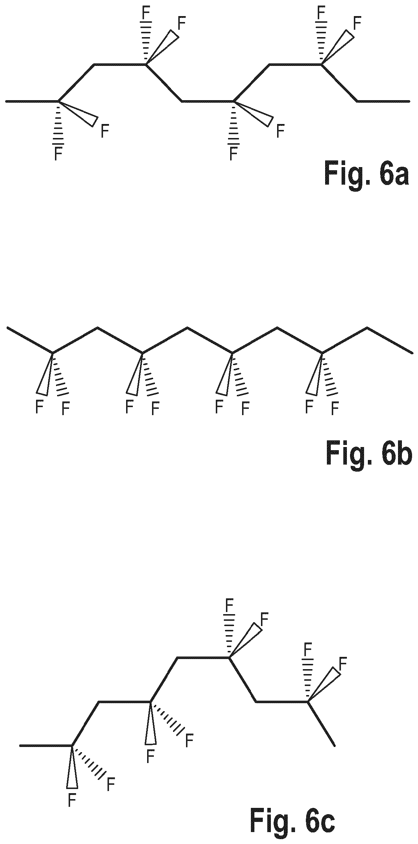

Erfindungsgemäß wird vom Kristallinitätsverhalten von PVDF wie folgt Gebrauch gemacht: Die teilweise Fluorierung der Polymerkette im PVDF bedeutet, dass es in verschiedene Polymorphe kristallisieren kann, die als α-Form (Figur 6a), als β-Form (Figur 6b) und als γ-Form (Figur 6c) bezeichnet werden. PVDF ist in der Regel zu 50 bis 60% kristallin; die Eigenschaften wie die Dichte hängen vom Ausmaß der Kristallinität und dem Anteil der einzelnen gebildeten kristallinen Phasen ab. Die α- und γ-Formen enthalten beide trans-Bindungen, während die β-Form ausschließlich aus trans-Bindungen entlang der Polymerkette besteht.

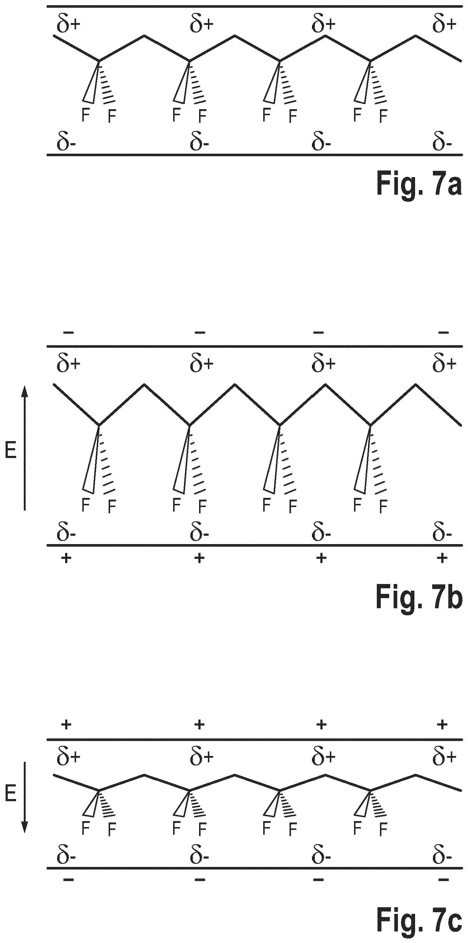

Aufgrund der Polarisierung der C-F-Bindung enthält ein PVDF-Makromolekül eine große Anzahl von Dipolen. Die α-Phase ist die thermodynamisch stabilste der kristallinen Phasen von PVDF, enthält aber keine allgemeine Vorzugsrichtung der Dipole und zeigt daher keine Reaktion bei Anlegen eines äußeren elektrischen Felds. In den β- und γ-Formen können sich sämtliche PVDF-Kettenmoleküle so ausrichten, dass ein permanenter Gesamtdipol entsteht. Der Prozess der Ausrichtung der Dipole wird als "poling" bzw. als Orientierungspolarisation (Figuren 7a bis 7c) bezeichnet und beinhaltet das Anlegen eines elektrischen Feldes an die Aktivmaterialschicht 2, und zwar bei einer Prozesstemperatur über der Curie-Temperatur von PVDF. Dadurch können sich die PVDF-Molekülketten mit dem elektrischen Feld ausrichten (der Curie-Übergang von PVDF tritt bei ca. 140 °C auf). Sobald die PVDF-Molekülketten ausgerichtet sind, wird das Aktivmaterial abgekühlt. Dabei verbleiben die PVDF-Dipole in ihrer ausgerichteten Position. Bei Anlegen des elektrisches Felds an die Aktivmaterialschicht 2 verformen sich die PVDF-Molekülketten, wie es in den Figuren 7a bis 7c gezeigt ist. In der Figur 7a ist eine PVDF-Molekülkette gezeigt, an der kein äußeres elektrisches Feld angelegt ist. In der Figur 7b befindet sich die PVDF-Molekülkette in einem, von einem Kondensator erzeugten elektrischen Feld. Die Feldrichtung ist derart gewählt, dass sich die PVDF-Molekülkette in einer Normalrichtung senkrecht zur Feldrichtung zusammenzieht, wodurch sich die Aktivmaterialschicht 2 - bei geeigneter Ausrichtung der PVDF-Dipole - in Dickenrichtung ebenfalls zusammenzieht. Umgekehrt ist in der Figur 7c eine PVDF-Molekülkette gezeigt, die sich in einem von einem Kondensator erzeugten elektrischen Feld befindet, dessen Feldrichtung umgekehrt ist. D.h., dass sich die PVDF-Molekülkette in der Figur 7c in einer Richtung senkrecht zur Feldrichtung ausdehnt, wodurch sich die Aktivmaterialschicht 2 - bei geeigneter Ausrichtung der PVDF-Dipole - in Dickenrichtung ebenfalls ausdehnt.

Das in den Figuren 7a bis 7c angedeutete Schema demonstriert das piezoelektrischen Verhalten von β-Phasen-PVDF. Die C-F-Bindungen sind ausgerichtet, wobei sich die größere Elektronendichte auf dem elektronegativen Fluoratom befindet. Wenn das elektrische Feld in der gleichen Richtung wie die elektrische Polung angelegt wird (Figur 7b), wird die δ-Ladung des Fluors zur positiv geladenen Kondensatorplatte hingezogen und die δ+-Ladung der Kohlenstoffatome zur negativ geladenen Kondensatorplatte hingezogen, so dass die Schichtdicke der Aktivmaterialschicht 2 größer wird. Das Gegenteil ist der Fall, wenn das elektrische Feld mit der entgegengesetzten Feldrichtung angelegt wird (Figur 7c). Um dies zu erreichen, muss die ferroelektrische Phase des PVDF-Kristalls vollständig verschwinden und nur die paraelektrische Phase verbleiben. Dies geschieht oberhalb der Curie-Temperatur (etwa 140°C).

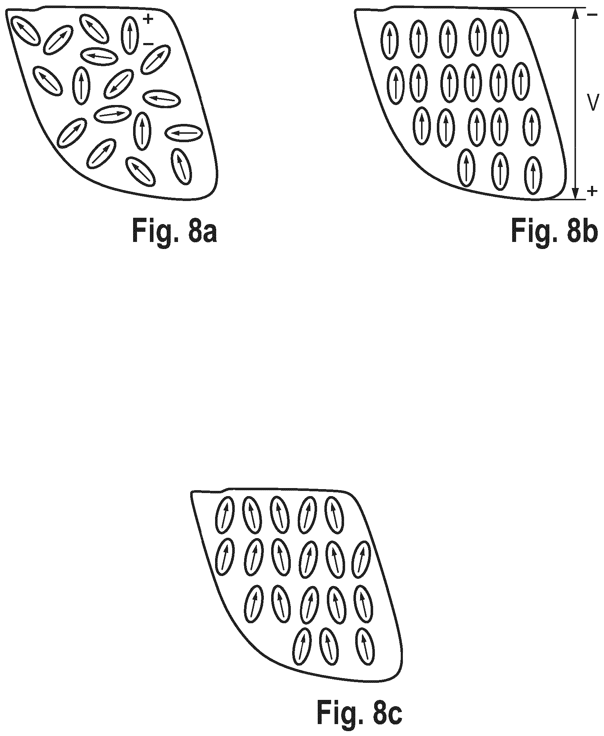

In den Figuren 8a bis 8c ist grob schematisch eine Orientierungspolymerisation, d .h ein poling, angedeutet: In der Figur 8a ist der Zustand vor der Polarisation gezeigt, in dem Dipole zufällig ausgerichtet sind. In der Figur 8b ist mittels eines Kondensators ein sehr großes elektrisches Gleichfeld zur Polarisierung angelegt, wodurch sich die PVDF-Dipole aufgrund der piezoelektrischen Eigenschaft von PVDF ausrichten. In der Figur 8c ist ein Zustand gezeigt, nachdem das elektrische Gleichfeld entfernt worden ist; demnach bleibt die Orientierungspolarisierung aufgrund der ferroelektrischen Eigenschaft von PVDF auch ohne elektrisches Feld weiter bestehen.

Um die PVDF-Dipolarität in der Aktivmaterialschicht 2 zu nutzen, erfolgt zunächst ein Ausrichtschritt (Figur 7b), bei dem eine Orientierungspolarisation durchgeführt wird. In der Orientierungspolarisation erfolgt durch Anlegen eines elektrischen Felds eine Ladungsverschiebung in den PVDF-Molekülketten. Dadurch werden die PVDF-Molekülketten permanent ausgerichtet. Die Orientierungspolarisation wird bei einer Prozesstemperatur oberhalb der Curie-Temperatur durchgeführt (140°C), bei deren Erreichen die ferroelektrischen Eigenschaften von PVDF vollständig verschwunden sind und lediglich die paraelektrischen Eigenschaften von PVDF verbleiben.

Aufgrund der ferroelektrischen Eigenschaften von PVDF unterhalb der Curie-Temperatur bleibt die Ausrichtung der PVDF-Molekülketten auch nach Abkühlung bestehen, und zwar selbst dann, wenn kein elektrischen Feld mehr angelegt ist.

Durch das Anlegen des elektrischen Feldes oberhalb der Curie-Temperatur kann nicht nur der Ausrichtschritt erfolgen, sondern können gleichzeitig die PVDF-Molekülketten verformt werden. Das heißt, dass je nach Feldrichtung des elektrischen Feldes die PVDF-Molekülketten in Normalrichtung zur Feldrichtung kontrahieren, wodurch sich die Porosität der Aktivmaterialschicht 2 reduziert, oder expandieren, wodurch sich die Porosität der Aktivmaterialschicht 2 erhöht.

Die oben genannten physikalischen Eigenschaften von PVDF werden in der in den Figuren 2a bis 5a gezeigten Prozesskette wie folgt genutzt: So wird der Ausrichtschritt während des ersten Trocknungsprozesses in der Trocknungsstation 7 durchgeführt, in der die Prozesstemperatur oberhalb der Curie-Temperatur liegt. Während des ersten Trocknungsprozesses wird vom Kondensator 26 ein äußeres elektrisches Feld angelegt. Die Feldrichtung ist dabei so gewählt, dass die PVDF-Molekülketten kontrahieren, und zwar unter Reduzierung der Porosität der Aktivmaterialschicht 2. Durch diese Reduzierung der Porosität der Aktivmaterialschicht 2 wird die im Kalandrierprozess stattfindende Verdichtung der Aktivmaterialschicht 2 unterstützt.

Das in der Figur 2a angelegte externe elektrische Feld kann eine Feldstärke von etwa 5MV/m aufweisen und kann sowohl in Flucht zur Dickenrichtung (Figur 2b) als auch quer zur Dickenrichtung (Figur 2c) ausgerichtet sein. Aufgrund des elektrischen Feldes ordnen sich die PVDF-Dipole und erzeugen eine planare Anisotropie in der XY-Ebene und auch eine Anisotropie in Dickenrichtung. Die Ausrichtung des Dipols komprimiert die Aktivmaterialschicht 2. Nach dem Trocknen wird das Coil 17 abgekühlt und eingelagert. Während der Lagerung bleibt die Dipolausrichtung unverändert. Die Dipolausrichtung ist der erste Schritt zur Herstellung einer hochdichten Aktivmaterialschicht 2.

Normalerweise ist das PVDF in der Aktivmaterialschicht 2 zunächst zufällig verteilt. Im Hinblick auf das Anlegen des elektrischen Felds wird zunächst festgestellt, welche Dipolposition am stärksten ausgeprägt ist, und dementsprechend wird das elektrische Feld angelegt. In den Figuren 2a bis 2c wird davon ausgegangen, dass die negativen Dipole vermehrt sowohl zur Oberseite der Elektrode als auch zur Rückseite der Elektrode gerichtet sind. Daher ist in der Figur 2b die positive Kondensatorplatte dem negativen Dipol zugewandt. Ein umgekehrtes elektrisches Feld ist anzulegen, wenn die negativen Dipole vermehrt sowohl nach unten als auch auf die Vorderseite der Elektrode gerichtet sind. Sofern die PVDF-Polymere zufällig angeordnet sind und es keine Anisotropie in der Dipolanordnung gibt, kann ein rotierendes elektrisches Feld angelegt werden, so dass sich die PVDF-Dipole entweder ausdehnen oder zusammenziehen und sich gleichmäßig ausrichten.

Danach folgt der Kalandrierprozess. Hier wird die Elektrodenbahn 13 auf die endgültige Dicke gepresst. Die Aktivmaterialschicht 2 der Elektrodenbahn 13 weist am Kalandrierausgang eine Zieldichte von etwa 3,6 g/cm³ auf. Durch die Kalandrierkraft wird Energie in den PVDF- und Kohlenstoff-Nanoröhren-Fasern gespeichert. Dies ist vergleichbar mit der in einer Feder gespeicherten elastischen Energie, wie es in den Figuren 3b und 3c angedeutet ist. Diese Energie wird bei der Lagerung der Coil 23 nach der Kalandrierung langsam freigesetzt. Dadurch ist eine geringfügige Erhöhung der Porosität aufgrund der Rückfederung (Figur 3c) möglich. Die Rückfederung erfolgt hauptsächlich in Dickenrichtung und kann zu einer leichten Erhöhung der Porosität in Dickenrichtung führen. Nach dem Kalandrieren wird der Coil 23 zur Schneidstation (Figur 4) geführt, in der die Kathoden K vereinzelt und zugeschnitten werden. Anschließend werden die Kathoden K in die Ablagestation zur Vakuumtrocknung transferiert. Hier werden Reste des Lösungsmittels NMP (N-Methyl-2-Pyrrolidon) entfernt.

In gleicher Weise wie in der Trocknungsstation 7 anhand der Figuren 2a, 2b und 2c angedeutet, wird auch bei der Vakuumtrocknung in der Ablagestation 25 vom Kondensator 28 ein äußeres elektrisches Feld angelegt. Dessen Feldrichtung ist so gewählt, dass die PVDF-Molekülketten expandieren, und zwar unter Erhöhung der Porosität der Aktivmaterialschicht 2. Dadurch ist in einem nachfolgenden Benetzungsprozess die Benetzung mit flüssigem Elektrolyt verbessert. Zudem ist im Betrieb der Batteriezelle ein Lithiumtransfer beschleunigt. In der Vakuumtrocknung wird Prozesstemperatur für drei bis vier Stunden auf 140°C gehalten. Auch hier wird das externe elektrische Feld von etwa 5MV/m in der Ebene (Figur 5c) und in Dickenrichtung (Figur 5b) angelegt. Die Feldrichtungen des elektrischen Felds sind umgekehrt zu den Feldrichtungen des in der Trocknungsstation 7 angelegten elektrischen Felds.

### Bezugszeichenliste

- 1: Stromableiterfolie
- 2: Aktivmaterialschicht
- 3: Ableiterfahne
- 5: Beschichtungsstation
- 7: Trocknungsstation
- 9: Wicklung bzw. Coil
- 11: Auftragswerkzeug
- 13: Elektrodenbahn
- 15: Heißluftdüsen
- 17: Wicklung bzw. Coil
- 19: Kalandrierstation
- 21: Walzenpaar
- 23: Wicklung bzw. Coil
- 24: Schneidstation
- 25: Ablagestation
- 26: Kondensator
- 27: Vakuumtrockner
- 28: Kondensator
- 29: Saugeinrichtung

## Patentansprüche

1. Verfahren zur Fertigung einer Elektrode (K) für eine Lithium-lonen-Batteriezelle, die aus einer Stromableiterfolie (1) mit darauf ein- oder beidseitig beschichtetem Aktivmaterial aufgebaut ist, das als Binder PVDF enthält, **dadurch gekennzeichnet, dass** das Verfahren zur Einstellung der Porosität der auf der Stromableiterfolie (1) beschichteten Aktivmaterialschicht (2) zumindest einen Prozessschritt aufweist, bei dem zumindest ein äußeres elektrisches Feld angelegt wird, mit dem die Dipolarität von PVDF derart genutzt wird, dass die PVDF-Molekülketten unter Reduzierung der Porosität kontrahieren oder unter Erhöhung der Porosität expandieren.

2. Verfahren nach Anspruch 1, **dadurch gekennzeichnet, dass** zur Nutzung der PVDF-Dipolarität ein Ausrichtschritt stattfindet, bei dem eine Orientierungspolarisation durchgeführt wird, in der durch Anlegen eines elektrischen Felds eine Ladungsverschiebung in den PVDF-Molekülketten erfolgt, wodurch insbesondere die PVDF-Molekülketten permanent ausgerichtet bleiben, und dass insbesondere die Orientierungspolarisation bei einer Prozesstemperatur oberhalb der Curie-Temperatur durchgeführt wird, bei deren Erreichen die ferroelektrischen Eigenschaften von PVDF vollständig verschwunden sind und lediglich die paraelektrischen Eigenschaften von PVDF verbleiben, und/oder dass insbesondere aufgrund der ferroelektrischen Eigenschaften von PVDF unterhalb der Curie-Temperatur die Ausrichtung der PVDF-Molekülketten auch nach Abkühlung bestehen bleiben, und zwar selbst wenn kein elektrisches Feld mehr angelegt ist.

3. Verfahren nach einem der vorhergehenden Ansprüche, **dadurch gekennzeichnet, dass** durch Anlegen eines elektrischen Felds, insbesondere bei einer Prozesstemperatur oberhalb der Curie-Temperatur, die im Ausrichtvorgang ausgerichteten PVDF-Molekülketten, insbesondere gleichzeitig mit der Orientierungspolarisation, verformbar sind, das heißt je nach Feldrichtung des elektrischen Felds in Normalrichtung zur Feldrichtung kontrahieren, wodurch sich die Porosität der Aktivmaterialschicht (2) reduziert, oder expandieren, wodurch sich die Porosität der Aktivmaterialschicht (2) erhöht.

4. Verfahren nach einem der vorhergehenden Ansprüche, **dadurch gekennzeichnet, dass** das Verfahren die folgenden Prozessschritte aufweist:
- Beschichtungsprozess, bei dem eine zähflüssige Ausgangskomponente des Aktivmaterials (das heißt Slurry) auf eine Stromableiterfolie (1) beschichtet wird, und zwar unter Bildung einer Elektrodenbahn (13);
- erster Trocknungsprozess, bei dem die Elektrodenbahn (13) getrocknet wird, und insbesondere der Aktivmaterialschicht (2) das Lösungsmittel entzogen wird;
- Kalandrierprozess, bei dem die Porosität der Aktivmaterialschicht (2) auf einen vordefinierten Wert reduziert wird;
- Schneidprozess, bei dem aus der Elektrodenbahn (13) mittels Schneidoperationen Elektroden (K) vereinzelt und zugeschnitten werden und
- zweiter Trocknungsprozess, insbesondere Vakuumtrocknungsprozess, bei dem der Aktivmaterialschicht (2) Restfeuchte und/oder Lösungsmittel entzogen wird.

5. Verfahren nach Anspruch 4, **dadurch gekennzeichnet, dass** der Ausrichtvorgang und/oder die Erhöhung/Reduzierung der Porosität der Aktivmaterialschicht (2) durch Anlegen eines äußeren elektrischen Felds während des ersten und/oder zweiten Trocknungsprozesses erfolgt, und dass insbesondere die Prozesstemperatur im ersten und/oder im zweiten Trocknungsprozess oberhalb der Curie-Temperatur liegt.

6. Verfahren nach Anspruch 4 oder 5, **dadurch gekennzeichnet, dass** der Ausrichtvorgang und/oder ein Anlegen des elektrischen Felds während des ersten Trocknungsprozesses erfolgt, und dass insbesondere die Feldrichtung des angelegten elektrischen Felds so gewählt ist, dass die PVDF-Molekülketten kontrahieren, und zwar unter Reduzierung der Porosität der Aktivmaterialschicht (2).

7. Verfahren nach einem der Ansprüche 4, 5 oder 6, **dadurch gekennzeichnet, dass** der Ausrichtvorgang und/oder ein Anlegen des elektrischen Felds während des zweiten Trocknungsprozesses erfolgt, und dass insbesondere die Feldrichtung des angelegten elektrischen Felds so gewählt ist, dass die PVDF-Molekülketten expandieren, und zwar unter Erhöhung der Porosität der Aktivmaterialschicht (2), wodurch insbesondere in einem nachfolgenden Benetzungsprozess die Benetzung mit flüssigen Elektrolyt verbessert ist, und/oder im Betrieb der Batteriezelle ein Lithiumtransfer beschleunigbar ist.

8. Verfahren nach einem der vorhergehenden Ansprüche, **dadurch gekennzeichnet, dass** sich ein Großteil des mit Aktivmaterial gemischten Betakristall-PVDF auf der Oberflächenschicht der Kathode oder der Anode befindet, so dass auf der Oberflächenschicht eine größere Porosität entsteht, und/oder dass insbesondere die Kathode oder die Anode mit zwei Schichten beschichtet ist, von denen eine untere Schicht überwiegend Alpha- und Gamma-PVDF innerhalb des Aktivmaterials aufweist und eine obere Schicht überwiegend Beta-PVDF aufweist.

9. Verfahren nach einem der vorhergehenden Ansprüche, **dadurch gekennzeichnet, dass** die Mehrzahl der PVDF-Dipole bei Raumtemperatur vor dem Trocknungsprozess in dieselbe Richtung ausrichtbar sind, und zwar durch Anlegen eines Magnetfeldes, und dass insbesondere das bei Raumtemperatur ferroelektrische PVDF durch ein Magnetfeld ausrichtbar ist, wobei der PVDF-Dipol aufgrund der ferroelektrischen Eigenschaft in seiner Position verbleibt, und/oder dass während des Vakuumtrocknungsprozesses nach dem Schneiden der Dipol durch Anlegen eines starken elektrischen Feldes drehbar ist, um eine maximale Porosität zu erreichen, und/oder dass die im Vakuumtrocknungsprozess vorherrschende Prozesstemperatur größer als die Curie-Temperatur ist, wodurch der Dipol durch ein elektrisches Feld drehbar ist, nicht aber durch ein magnetisches Feld, so dass nun die Mehrheit der Dipole an der Erhöhung der Porosität beteiligt ist.

10. Verfahren nach einem der vorhergehenden Ansprüche, **dadurch gekennzeichnet, dass** - anstatt ein elektrisches Feld zweimal bei oberhalb der Curie-Temperatur anzulegen, während der Trocknung nach der Beschichtung und während der Vakuumtrocknung nach dem Schneiden, das elektrische Feld nur während der Vakuumtrocknung nach dem Schneiden anlegbar ist, wodurch insbesondere zwar die Porosität geringer ist, jedoch die Energieeinsparung zur Erzeugung des elektrischen Feldes gesteigert ist, so dass der Dipol nach dem Schneiden - anstelle von zweimal - nur einmal ausrichtbar ist, um die Porosität zu erzeugen.
